# EUROPÄISCHE PATENTSCHRIFT

(11) **EP 2 601 424 B1**
(45) Veröffentlichungstag und Bekanntmachung des Hinweises auf die Patenterteilung: **03.04.2019**
(21) Anmeldenummer: 11724184.4
(22) Anmeldetag: 06.06.2011
(51) Int. Cl.: F16C 35/077, B25F 5/00, F16C 23/08, B24B 23/02, B24B 41/04

(54) **WELLENLAGERVORRICHTUNG FÜR EINE HANDWERKZEUGMASCHINE**
SHAFT BEARING DEVICE FOR A HAND-HELD POWER TOOL
PALIER D'ARBRE POUR MACHINE-OUTIL PORTATIVE

(30) Priorität: 06.08.2010 DE 102010038990
(43) Veröffentlichungstag der Anmeldung: 12.06.2013
(73) Patentinhaber: Robert Bosch GmbH, 70442 Stuttgart (DE)
(72) Erfinder: ESENWEIN, Florian, 73066 Uhingen-Holzhausen (DE); SCHOMISCH, Thomas, 70794 Filderstadt (DE)
(86) Internationale Anmeldenummer: PCT/EP2011/059238
(87) Internationale Veröffentlichungsnummer: WO 2012/016730

(56) Entgegenhaltungen:
- DE-A1- 2 816 398
- DE-A1- 10 065 658
- DE-A1- 10 355 363
- DE-A1-102008 040 673

## Beschreibung

### Stand der Technik

Es ist bereits eine Wellenlagervorrichtung für eine Handwerkzeugmaschine bekannt, die eine aus Aluminium gebildete erste Stützeinheit und eine von einem Sicherungsring gebildete zweite Stützeinheit umfasst, die dazu vorgesehen sind, ein Lagerelement einer Welle axial und/oder radial abzustützen.

Die DE102008040673 A1 offenbart eine Wellenlagerung in einem Lenksystem, sowie ein damit ausgestattetes Lenkgetriebe. Die Wellenlagerung in einem Lenkgetriebe ist als Schraubradgetriebe für ein elektrisches Hilfskraftlenksystem ausgebildet.

Die DE102008040673 A1 offenbart eine Getriebevorrichtung mit einem Winkelgetriebe und einem Lagerflansch, der zumindest einen Teil einer ersten Lagerstelle für eine Abtriebswelle bildet.

### Offenbarung der Erfindung

Die Erfindung geht von einer Wellenlagervorrichtung für eine Handwerkzeugmaschine, insbesondere für einen Winkelschleifer und/oder eine Kreissäge, gemäss Anspruch 1 aus.

Unter einer "Stützeinheit" soll insbesondere eine Einheit zu einer axialen und/oder radialen Abstützung des Lagerelements der Welle verstanden werden, die insbesondere dazu vorgesehen ist, das Lagerelement direkt aufzunehmen, wobei vorzugsweise keine Fläche der Stützeinheit dazu vorgesehen ist, als Gleit- und/oder Wälzlagerfläche zu dienen. Unter einem "Plattenelement" soll insbesondere ein räumliches Element verstanden werden, das, in einer Abwicklung in einer Ebene betrachtet, in einem Querschnitt senkrecht zur Ebene eine unrunde Querschnitts
fläche aufweist und senkrecht zur Ebene eine insbesondere zumindest im Wesentlichen gleichbleibende Materialstärke aufweist, die weniger als 50%, vorzugsweise weniger als 25% und besonders bevorzugt weniger als 10% einer Flächenerstreckung des räumlichen Elements parallel zur Ebene, insbesondere einer kleinsten Flächenerstreckung des Elements parallel zur Ebene beträgt. Insbesondere weist das Plattenelement eine Materialstärke auf, die weniger als 1cm beträgt. Das Plattenelement kann insbesondere aus einem ebenen Grundkörper vorzugsweise durch Verformung hergestellt sein. Unter einer "Axialabwinklung" soll, bei einer Betrachtung des Plattenelements in Richtung von einem einer Rotationsachse der Wellenlagervorrichtung abgewandten, radial äußeren Ende zu einem der Rotationachse der Wellenlagervorrichtung zugewandten radial inneren Ende des Plattenelements, insbesondere eine Erstreckungsrichtungsänderung des Plattenelements in eine Axialrichtung verstanden werden, wobei vorzugsweise die Erstreckungsrichtungsänderung in ihrer Summe größer als 45° und vorzugsweise größer als 70° ist. Unter "Axialrichtung" soll insbesondere eine Richtung verstanden werden, die parallel zu der Rotationsachse der Wellenlagervorrichtung verläuft. Unter einer "Radialabwinklung" soll, bei einer Betrachtung des Plattenelements in Richtung von einem der Rotationsachse der Wellenlagervorrichtung abgewandten, radial äußeren Ende zu einem der Rotationachse der Wellenlagervorrichtung zugewandten, radial inneren Ende des Plattenelements, insbesondere eine Erstreckungsrichtungsänderung des Plattenelements in eine Radialrichtung verstanden werden, wobei vorzugsweise die Erstreckungsrichtungsänderung in ihrer Summe größer als 45° und vorzugsweise größer als 70° ist. Unter "Radialrichtung" soll insbesondere eine Richtung verstanden werden, die sich von der Rotationsachse der Wellenlagervorrichtung, die vorzugsweise mit einer Rotationsachse der Welle übereinstimmt, aus senkrecht zu derselben erstreckt.

Durch die zumindest eine Axial- und/oder Radialabwinklung des Plattenelements kann eine vorteilhaft kompakte Bauweise der Stützeinheit der Wellenlagervorrichtung erreicht werden. Es kann eine vorteilhafte Anpassung des Plattenelements an angrenzende Bauteile, insbesondere an das Lagerelement, und eine bevorzugte Bauraumersparnis, insbesondere in die Radialrichtung, erreicht werden. Das Lagerelement der Welle kann auf jede, einem Fachmann als sinnvoll erscheinende Weise ausgestaltet sein. Besonders bevorzugt ist das Lagerelement jedoch von einem Wälzlager, wie insbesondere von einem Kugelrillenlager, gebildet.

Weist das Plattenelement zumindest zwei Axial- und/oder Radialabwinklungen auf, kann eine präzise Anpassung des Plattenelements an radial innerhalb des Plattenelements angeordnete Bauteile der Handwerkzeugmaschine und eine sehr kompakte Bauweise der Wellenlagervorrichtung erreicht werden. Unter "radial innerhalb" des Plattenelements soll insbesondere ein Bereich und/oder Bauraum verstanden werden, der in Radialrichtung von der Rotationsachse der Wellenlagervorrichtung betrachtet, zumindest teilweise vor dem Plattenelement angeordnet ist. Vorzugsweise weist das Plattenelement drei, besonders bevorzugt sogar vier Axial- und/oder Radialabwinklungen auf, wodurch eine Anpassung des Plattenelements an die radial innerhalb des Plattenelements angeordneten Bauteile vorteilhaft verbessert werden kann.

Es wird vorgeschlagen, dass wenigstens eine der zumindest zwei Stützeinheiten zumindest teilweise aus Kunststoff gebildet ist. Dadurch kann eine vorteilhaft leichte und insbesondere kostengünstige Stützeinheit erreicht werden. Unter "einer ersten und einer zweiten Stützeinheit" sollen in diesem Zusammenhang insbesondere zwei getrennt voneinander ausgebildete, insbesondere zerstörungsfrei trennbare, Bauteile verstanden werden.

Es wird vorgeschlagen, dass die Wellenlagervorrichtung das Lagerelement aufweist, das getrennt von der aus Kunststoff gebildeten Stützeinheit ausgebildet ist. Unter "getrennt" soll insbesondere verstanden werden, dass das Lagerelement und die aus Kunststoff gebildete Stützeinheit insbesondere als zerstörungsfrei trennbare Bauteile ausgebildet sind. Dadurch kann eine Wellenlagervorrichtung erreicht werden, bei der das Lagerelement in einem Verschleißfall besonders vorteilhaft einzeln ausgewechselt werden kann, wodurch Kosten für ein Ersatzbauteil vorteilhaft eingespart werden können. Zudem kann das Lagerelement durch ein beliebiges, geometrisch passendes Lagerelement, unabhängig von einem Hersteller der Handwerkzeugmaschine ersetzt werden, wodurch eine hohe Flexibilität erreicht werden kann.

Des Weiteren wird vorgeschlagen, dass wenigstens eine der zumindest zwei Stützeinheiten von einem Blechteil gebildet ist. Unter einem "Blechteil" soll insbesondere ein Plattenelement, welches aus einem Metall gebildet ist, verstanden werden. Die Verwendung eines Blechteils weist den Vorteil auf, dass die wenigstens eine Stützeinheit besonders leicht und Bauraum einsparend und dennoch vorteilhaft stabil ausgebildet werden kann. Zudem kann eine vorteilhaft kostengünstige Herstellung der Stützeinheit erreicht werden.

In einer weiteren Ausgestaltung der Erfindung wird vorgeschlagen, dass die Wellenlagervorrichtung wenigstens eine getrennt von den zumindest zwei Stützeinheiten ausgebildete Befestigungseinheit aufweist, welche dazu vorgesehen ist, die zumindest zwei Stützeinheiten miteinander zu koppeln. Dabei soll unter "koppeln" insbesondere verstanden werden, dass die beiden Stützeinheiten mittels der Befestigungseinheit form- und/oder insbesondere kraftschlüssig verbunden werden. Die getrennt von den Stützeinheiten ausgebildete Befestigungseinheit bietet den Vorteil, dass die Befestigungseinheit besonders einfach ausgestaltet sein kann und somit kostengünstig hergestellt werden kann. Zudem kann die Befestigungseinheit in einem Verschleißfall einzeln ausgetauscht werden, wodurch ein Austausch einer, zumindest im Wesentlichen intakten Baugruppe vermieden werden kann und so Kosten eingespart werden können. Vorzugsweise umfasst die Befestigungseinheit zumindest ein von einer Schraube und/oder von einer Ausnehmung mit einem Innengewinde gebildetes Befestigungselement. Es ist aber auch jede andere, dem Fachmann als sinnvoll erscheinende Befestigungseinheit denkbar.

Zudem wird vorgeschlagen, dass die Befestigungseinheit wenigstens ein Befestigungselement aufweist, das sich in einem montierten Zustand durch die zumindest zwei Stützeinheiten zumindest in einer Axialrichtung erstreckt. Durch die erfindungsgemäße Ausgestaltung kann vorteilhaft Bauraum insbesondere in Radialrichtung und/oder in Axialrichtung eingespart werden. Zudem kann eine vorteilhafte Sicherung der Stützeinheiten erreicht werden und ein Verrutschen der zumindest zwei Stützeinheiten relativ zueinander und relativ zu einem Getriebegehäuse kann sicher verhindert werden.

Erfindungsgemäß umfasst die Wellenlagervorrichtung wenigstens eine Befestigungseinheit zum lösbaren Verbinden, die als Bajonettverschluss ausgebildet ist. Unter einem "Bajonettverschluss" soll insbesondere eine Einheit mit wenigstens zwei Befestigungselementen verstanden werden, wobei insbesondere bei einem Steckvorgang eine Ausformung des ersten Befestigungselements durch eine Ausnehmung des zweiten Befestigungselements an einer Ausformung des zweiten Befestigungselements vorbei geführt wird, um dann bei einem anschließenden Verdrehen hinter der Ausformung des zweiten Befestigungselements geführt zu werden und damit in Steckrichtung eine Formschlussverbindung zu erzielen. Durch die Ausbildung der Befestigungseinheit als Bajonettverschluss kann eine besonders vorteilhaft einfache und insbesondere werkzeuglose Verbindung zwischen den zumindest zwei Stützeinheiten erreicht werden.

In einer weiteren Ausgestaltung der Erfindung wird vorgeschlagen, dass die Wellenlagervorrichtung wenigstens eine Dichtungseinheit aufweist, die in einem radial inneren Bereich wenigstens einer der zumindest zwei Stützeinheiten angeordnet ist. Durch die erfindungsgemäße Dichtungseinheit kann eine vorteilhafte Abdichtung des Lagerelements insbesondere gegen Staub und/oder Schmutz, der insbesondere in einem Betriebszustand der Handwerkzeugmaschine entsteht, erreicht werden. Die Dichtungseinheit kann vorteilhaft zumindest ein Dichtungselement umfassen, welches vorzugsweise als Filzring ausgebildet sein kann, wodurch die Dichtungseinheit besonders einfach, vorteilhaft kostengünstig und robust ausgestaltet werden kann. Die Dichtungseinheit kann auch aus jedem anderen, dem Fachmann sinnvoll erscheinenden Materialien gebildet sein, wie insbesondere aus einem Elastomer. Die Dichtungseinheit kann vorzugsweise mit einer der zumindest zwei Stützeinheiten kraftschlüssig und/oder stoffschlüssig und/oder formschlüssig, vor einer Montage der Stützeinheit in eine Handwerkzeugmaschine, fest verbunden sein. Durch eine Blechscheibe, die in Axialrichtung zwischen dem Lagerelement und der Dichtungseinheit angeordnet ist, kann eine besonders vorteilhafte Abdichtung des Lagerelements erreicht werden. Unter einer "Blechscheibe" soll insbesondere ein aus Metall gebildetes Bauteil verstanden werden, dessen Materialerstreckung in wenigstens eine Radialrichtung zumindest 10% von wenigstens einer Gesamterstreckung, wie insbesondere ein Durchmesser, des Bauteils in wenigstens eine Radialrichtung beträgt, wobei eine Materialerstreckung des Bauteils in Axialrichtung vorzugsweise weniger als 10% wenigstens einer Gesamterstreckung des Bauteils in wenigstens eine Radialricht tung beträgt. Es ist zudem denkbar, einen vorteilhaft geringen Abstand zumindest einer Stützeinheit zu einem Stützflansch der Welle in Axial und/oder in Radialrichtung vorzusehen, welcher ein Eindringen von Schmutz und/oder Staub sicher verhindert werden kann, sodass eine vorteilhaft einfache Abdichtung des Lagerelements gegen Schmutz und/oder Staub erreicht werden kann.

Ferner wird vorgeschlagen, dass wenigstens eine der zumindest zwei Stützeinheiten zumindest ein erstes Zentrierelement zur Zentrierung zumindest einer der zumindest zwei Stützeinheiten an einem Getriebegehäuse der Handwerkzeugmaschine und zumindest ein zweites Zentrierelement zur Zentrierung des Lagerelements der Welle an zumindest einer weiteren Stützeinheit aufweist. Durch die Zentrierelemente kann eine vorteilhaft einfache und präzise Zentrierung zumindest einer der zumindest zwei Stützeinheiten und des Lagerelements erreicht werden und ein Montagevorgang kann vorteilhaft unterstützt werden. Vorzugsweise sind die Zentrierelemente von Blechlaschen gebildet, die einstückig mit dem von dem Blechteil gebildeten Plattenelement ausgebildet sind. Dabei soll unter einer "Blechlasche" insbesondere ein Teil des Plattenelements verstanden werden, welches aus einer Haupterstreckungsebene des Plattenelements herausgebogen ist. Dadurch können die Zentrierelemente vorteilhaft einfach und kostengünstig hergestellt werden. Vorzugsweise sind zwischen den Zentrierelementen als Stege ausgebildete Verbindungselemente vorgesehen, welche einen Durchmesser bilden, der insbesondere kleiner ist als ein Durchmesser, den die Zentrierelemente zur Zentrierung des Lagerelements bilden. Auf den Stegen kann vorteilhaft das Lagerelement gehalten sein und vorzugsweise in Axialrichtung gesichert werden. Es ist zudem denkbar, die als Blechlaschen ausgebildeten Zentrierelemente, als Hakenelemente auszubilden. Die Hakenelemente der zumindest einen Stützeinheit können vorzugsweise in Ausnehmungen, die in der anderen der zumindest zwei Stützeinheiten vorgesehen sind, eingreifen. Dadurch kann zu den bereits genannten Vorteilen eine vorteilhafte Sicherung der zumindest zwei Stützeinheiten in Axialrichtung aneinander und vorzugsweise auch einer Zubehöreinheit an den zumindest zwei Stützeinheiten in Axialrichtung auf vorteilhaft einfache Weise erreicht werden.

In einer weiteren Ausgestaltung der Erfindung wird vorgeschlagen, dass zumindest eine der zumindest zwei Stützeinheiten einen in einer Umfangsrichtung profilierten Aufnahmebereich aufweist, der sich in Umfangsrichtung der zumindest einen Stützeinheit erstreckt und der dazu vorgesehen ist, zumindest im Wesentlichen eine Zubehöreinheit formschlüssig aufzunehmen. Unter einem "in einer Umfangsrichtung profilierten Aufnahmebereich" soll in diesem Zusammenhang insbesondere ein Bereich verstanden werden, der in einer Schnittansicht in einer parallel zur Radialrichtung liegenden Ebene eine von einer kreisförmigen Kontur abweichende Kontur aufweist. Dadurch kann auf vorteilhaft einfache und kostengünstige Weise eine robuste und verdrehsichere Aufnahme der Zubehöreinheit erreicht werden.

Zudem wird ein System mit einer Wellenlagervorrichtung und wenigstens einer zu den zumindest zwei Stützeinheiten differierenden weiteren Stützeinheit, die alternativ zu zumindest einer der zumindest zwei Stützeinheiten mit der anderen der zumindest zwei Stützeinheiten koppelbar ist, vorgeschlagen. An der wenigstens einen zu den zumindest zwei Stützeinheiten differierenden weiteren Stützeinheit kann vorzugsweise die Zubehöreinheit für die Handwerkzeugmaschine vorgesehen sein. Durch das erfindungsgemäße System kann eine Vielzahl verschiedener Handwerkzeugmaschinen erreicht werden, wobei eine vorteilhaft hohe Anzahl von Bauteilen der Handwerkzeugmaschine unverändert übernommen werden kann. Dadurch können besonders vorteilhaft Kosten für eine Konstruktion und zudem Herstellkosten eingespart werden. Die Zubehöreinheit kann vorzugsweise eine Schutzhaube, einen Anschlag und/oder einen Rast- und/oder Spannhebel umfassen.

### Zeichnung

Weitere Vorteile ergeben sich aus der folgenden Zeichnungsbeschreibung. In der Zeichnung sind neun Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Handwerkzeugmaschine in einer Draufsicht,
- Fig. 2: einen Ausschnitt einer perspektivischen Schnittdarstellung der Handwerkzeugmaschine entlang einer Schnittlinie II - II mit einer Wellenlagervorrichtung,
- Fig. 3a: einen der Figur 2 entsprechenden Ausschnitt mit einer alternativen Stützeinheit der Wellenlagervorrichtung und einer Schutzhaube,
- Fig. 3b: eine schematische, perspektivische Darstellung der alternativen Stützeinheit der Wellenlagervorrichtung aus Figur 3a bei ausgeblendeter Schutzhaube,
- Fig. 4: einen Ausschnitt eines weiteren Ausführungsbeispiel einer Wellenlagervorrichtung in einer schematischen, perspektivischen Schnittdarstellung,
- Fig. 5: einen Ausschnitt eines weiteren Ausführungsbeispiel einer Wellenlagervorrichtung in einer schematischen Schnittdarstellung,
- Fig. 6: einen Ausschnitt eines weiteren Ausführungsbeispiel einer Wellenlagervorrichtung in einer schematischen Schnittdarstellung,
- Fig. 7: einen Ausschnitt eines weiteren Ausführungsbeispiel einer Wellenlagervorrichtung in einer schematischen Schnittdarstellung,
- Fig. 8: eine schematische Schnittdarstellung einer Stützeinheit eines weiteren Ausführungsbeispiels einer Wellenlagervorrichtung in einer Draufsicht,
- Fig. 9: die Wellenlagervorrichtung in einem nichtmontierten Zustand in einer schematischen, perspektivischen Schnittdarstellung,
- Fig. 10: einen Ausschnitt eines weiteren Ausführungsbeispiel einer erfindungsgemäßen Wellenlagervorrichtung in einer schematischen Schnittdarstellung,
- Fig. 11: zwei Stützeinheiten der erfindungsgemäßen Wellenlagervorrichtung in einem nicht-montierten Zustand in einer schematischen, perspektivischen Schnittdarstellung,
- Fig. 12: zwei Stützeinheiten eines weiteren Ausführungsbeispiels einer erfindungsgemäßen Wellenlagervorrichtung in einem nicht-montierten Zustand in einer schematischen, perspektivischen Schnittdarstellung,
- Fig. 13: einen Ausschnitt der erfindungsgemäßen Wellenlagervorrichtung in einer schematischen Schnittdarstellung und
- Fig. 14: zwei Stützeinheiten eines weiteren Ausführungsbeispiels einer Wellenlagervorrichtung in einem nicht-montierten Zustand in einer schematischen, perspektivischen Schnittdarstellung.

### Beschreibung der Ausführungsbeispiele

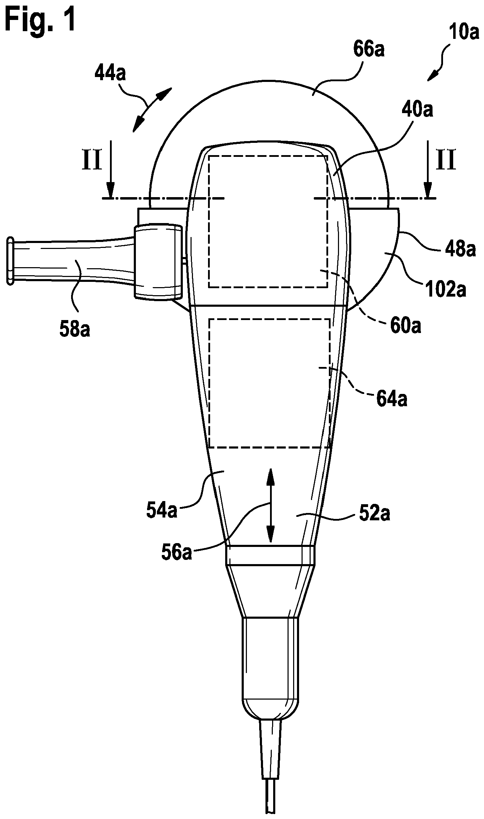

Figur 1 zeigt eine als Winkelschleifer ausgebildete Handwerkzeugmaschine 10a mit einem von einem Motorgehäuse 52a gebildeten Haupthandgriff 54a, welcher sich in einer Haupterstreckungsrichtung 56a der Handwerkzeugmaschine 10a erstreckt, und einem an einem Getriebegehäuse 40a angeordneten Zusatzhandgriff 58a, welcher sich senkrecht zur Haupterstreckungsrichtung 56a der Handwerkzeugmaschine 10a und senkrecht zu einer Axialrichtung 32a erstreckt. Das Getriebegehäuse 40a nimmt eine nicht näher dargestellte Getriebeeinheit 60a auf und ist in einem einer Werkzeugaufnahme 62a zugewandten Bereich der Handwerkzeugmaschine 10a senkrecht zur Haupterstreckungsrichtung 56a der Handwerkzeugmaschine 10a an das Motorgehäuse 52a angefügt. In einem radial inneren Bereich des Motorgehäuses 52a ist eine nicht näher dargestellte, von einem Elektromotor gebildete Antriebseinheit 64a angeordnet. Die Werkzeugaufnahme 62a ist dazu vorgesehen, ein Einsatzwerkzeug 66a, insbesondere eine Schleif- oder Trennscheibe aufzunehmen.

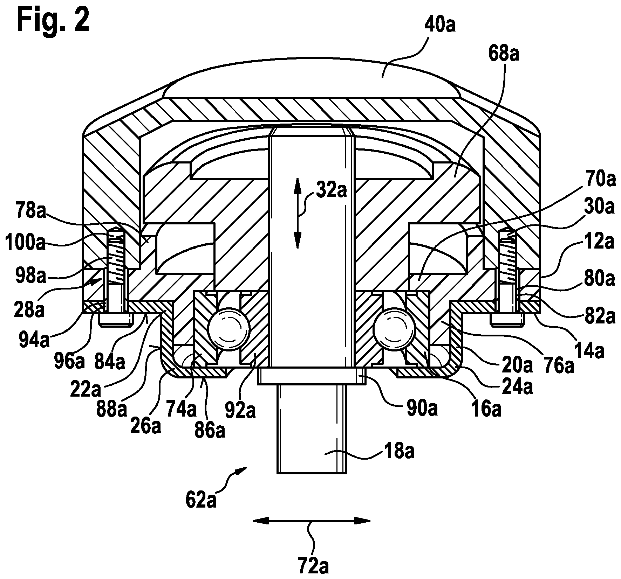

Figur 2 zeigt einen Schnitt durch das Getriebegehäuse 40a entlang der Linie II-II Die Getriebeeinheit 60a weist eine Welle 18a auf, die sich in Axialrichtung 32a durch das Getriebegehäuse 40a erstreckt und an einer der Werkzeugaufnahme 62a zugewandten Seite des Getriebegehäuses 40a aus dem Getriebegehäuse 40a herausragt. Ein Ende der Welle 18a, welches aus dem Getriebegehäuse 40a herausragt, weist die Werkzeugaufnahme 62a auf. An einem der Werkzeugaufnahme 62a abgewandten Ende der Welle 18a ist ein als Tellerrad ausgebildetes Zahnrad 68a auf die Welle 18a aufgepresst, welches einen Teil eines Winkelgetriebes der Getriebeeinheit 60a bildet.

Um die Welle 18a drehbar im Getriebegehäuse 40a zu lagern, ist eine Wellenlagervorrichtung mit einer ersten, der Getriebeeinheit 60a zugewandten Stützeinheit 12a und mit einer zweiten, der Werkzeugaufnahme 62a zugewandten Stützeinheit 14a vorgesehen. Die erste und die zweite Stützeinheit 12a, 14a ist dazu vorgesehen, ein als Wälzlager ausgebildetes Lagerelement 16a, in welchem die Welle 18a gelagert ist, axial und radial abzustützen und gegen ein Verrutschen oder Herausfallen zu sichern.

Die erste, aus einem Kunststoff gebildete Stützeinheit 12a weist hierzu einen Stützflansch 70a auf, der sich in einer parallel zu einer Radialrichtung 72a verlaufenden Ebene erstreckt und der in einem montierten Zustand in Axialrichtung 32a, von der Getriebeeinheit 60a zur Werkzugaufnahme 62a betrachtet, vor dem Lagerelement 16a angeordnet ist. An diesem Stützflansch 70a liegt ein feststehender Außenring 74a des Lagerelements 16a in einem montierten Zustand an und stützt sich in Axialrichtung 32a zur Getriebeeinheit 60a hin an dem Stützflansch 70a ab. Zudem weist die erste Stützeinheit 12a einen weiteren Stützflansch 76a auf, der sich in einem montierten Zustand von der ersten Stützeinheit 12a in Axialrichtung 32a zur Werkzeugaufnahme 62a hin erstreckt. Das Lagerelement 16a liegt in Radialrichtung 72a an dem Stützflansch 76a an und stützt sich an dem Stützflansch 76a in Radialrichtung 72a ab. In einem Betriebszustand der Handwerkzeugmaschine 10a werden in Radialrichtung 72a wirkende Kräfte der Welle 18a vom Lagerelement 16a an die erste Stützeinheit 12a weitergeleitet. Die erste Stützeinheit 12a weist zudem einen, sich in Axialrichtung 32a von der ersten Stützeinheit 12a zum Getriebegehäuse 40a hin erstreckenden Zentrierbund 78a auf, über welchen sich die erste Stützeinheit 12a an einer Innenseite des Getriebegehäuses 40a abstützt und relativ zum Getriebegehäuse 40a zentriert. Dadurch kann die in Radialrichtung 72a wirkende Kraft in Radialrichtung 72a von der ersten Stützeinheit 12a an das Getriebegehäuse 40a weitergeleitet und von diesem aufgenommen werden. Zudem weist die erste Stützeinheit 12a über einen Umfang der ersten Stützeinheit 12a gleichmäßig verteilte, als Axialkanäle 80a ausgebildete Ausnehmungen 82a auf, die radial außerhalb des Zentrierbunds 78a der ersten Stützeinheit 12a angeordnet sind.

Die zweite Stützeinheit 14a umfasst ein von einem Blechteil 26a gebildetes Plattenelement 20a mit einer Axial- und einer Radialabwinklung 22a, 24a. Das Blechteil 26a weist zwei Kreisringflächen 84a, 86a auf, die sich jeweils in einer Ebene erstrecken, die senkrecht zur Axialrichtung 32a steht. Unter einer "Kreisringfläche" soll in diesem Zusammenhang eine Fläche verstanden werde, die von zwei konzentrisch angeordneten Kreisen eingeschlossen wird.

Die zweite Kreisringfläche 86a stützt das als Wälzlager ausgebildete Lagerelement 16a, in dem die Welle 18a drehbar gelagert ist, an dem feststehenden Außenring 74a des Lagerelements 16a in Axialrichtung 32a zur Werkzeugaufnahme 62a hin ab. An der Welle 18a ist zudem ein Stützflansch 90a vorgesehen, der einen mit der Welle 18a umlaufenden Innenring 92a des als Wälzlager ausgebildeten Lagerelements 16a in Axialrichtung 32a zur Werkzeugaufnahme 62a hin abstützt.

Die erste Kreisringfläche 84a ist in Axialrichtung 32a von der Werkzeugaufnahme 62a aus zur Getriebeeinheit 60a hin betrachtet nach der zweiten Kreisringfläche 86a angeordnet. Die erste Kreisringfläche 84a liegt in Axialrichtung 32a an der ersten, aus Kunststoff gebildeten Stützeinheit 12a an und weist über einen Umfang der Kreisringfläche 84a verteilte, als Axialkanäle 94a ausgebildete Ausnehmungen 96a auf. Die erste Kreisringfläche 84a und die zweite Kreisringfläche 86a sind mittels eines sich in Axialrichtung 32a erstreckenden Bereichs der zweiten Stützeinheit 14a miteinander verbunden. Der sich in Axialrichtung 32a erstreckende Bereich bildet eine zylinderförmige Mantelfläche 88a der zweiten Stützeinheit 14a.

Zudem ist eine getrennt von den Stützeinheiten 12a, 14a ausgebildete Befestigungseinheit 28a vorgesehen, die von Schrauben 98a und von zu den Schrauben 98a korrespondierenden Ausnehmungen 100a mit einem Innengewinde im Getriebegehäuse 40a gebildete Befestigungselemente 30a umfasst. In einem montierten Zustand der Stützeinheiten 12a, 14a sind die Ausnehmungen 82a, 96a der ersten und der zweiten Stützeinheit 12a, 14a und die als Ausnehmungen 100a ausgebildeten Befestigungselemente 30a in Axialrichtung 32a nacheinander liegend angeordnet. Die als Schrauben 98a ausgebildeten Befestigungselemente 30a erstrecken sich in Axialrichtung 32a durch die Ausnehmungen 82a, 96a der ersten und der zweiten Stützeinheit 12a, 14a hindurch und sind in die Ausnehmungen 100a im Getriebegehäuse 40a eingeschraubt. Somit werden die erste und die zweite Stützeinheit 12a, 14a über die Befestigungselemente 30a der Befestigungseinheit 28a in Axialrichtung 32a aneinander und an das Getriebegehäuse 40a der Handwerkzeugmaschine 10a gekoppelt.

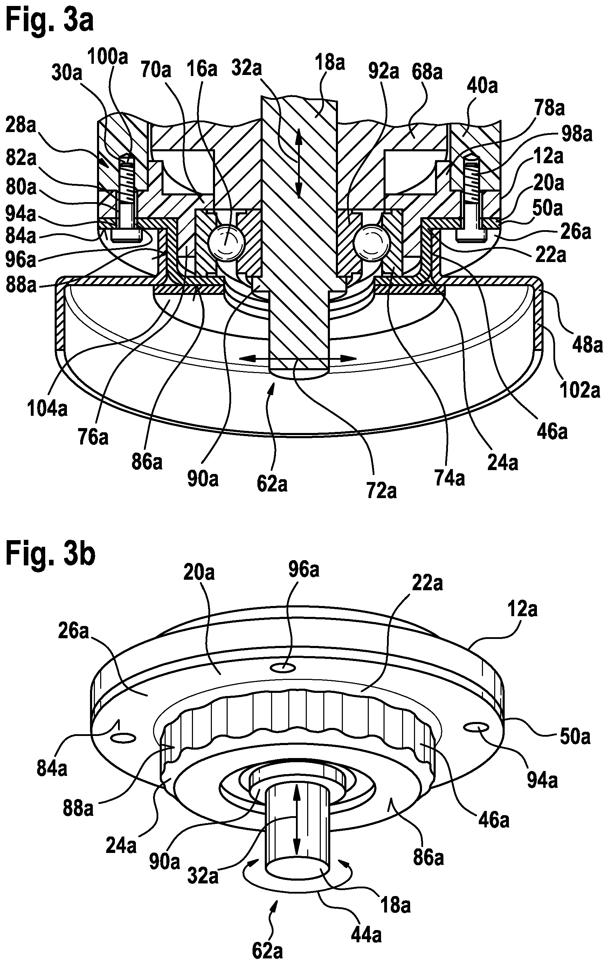

Figur 3a zeigt die Wellenlagervorrichtung aus Figur 2, wobei die zweite Stützeinheit 14a durch eine weitere, von der ersten und von der zweiten Stützeinheit 12a, 14a differierenden Stützeinheit 50a ersetzt ist, die alternativ zu der zweiten Stützeinheit 14a aus Figur 2 an die erste Stützeinheit 12a gekoppelt ist. Die alternative Stützeinheit 50a ist von einem als Blechteil 26a ausgebildeten Plattenelement 20a gebildet und weist eine Axial- und eine Radialabwinklung 22a, 24a auf. Ein sich an die Axialabwinklung 22a der alternativen Stützeinheit 50a anschließender Bereich, welcher sich parallel zur Axialrichtung 32a erstreckt, bildet einen Aufnahmebereich 46a der alternativen Stützeinheit 50a für eine von einer Schutzhaube 102a gebildete Zubehöreinheit 48a. Die Schutzhaube 102a erstreckt sich in einer Umfangsrichtung 44a der alternativen Stützeinheit 50a über einen Winkelbereich von 180° und liegt an dem sich parallel zu einer Axialrichtung 32a erstreckenden Aufnahmebereich 46a der alternativen Stützeinheit 50a an, wodurch eine Zentrierung der Schutzhaube 102a erreicht wird. Zudem ist die Schutzhaube 102a von einer Scheibe 104a in Axialrichtung 32a gegen ein Abrutschen der Schutzhaube 102a von der alternativen Stützeinheit 50a gesichert. Die Scheibe 104a erstreckt sich senkrecht zur Axialrichtung 32a und ist mit der alternativen Stützeinheit 50a mittels einer Schweißnaht stoffschlüssig verbunden.

Figur 3b zeigt die alternative Stützeinheit 50a ohne die von der Schutzhaube 102a gebildete Zubehöreinheit 48a in einem montierten Zustand an der ersten Stützeinheit 12a. Um die Schutzhaube 102a gegen ein Verdrehen in Umfangsrichtung 44a relativ zur alternativen Stützeinheit 50a zu sichern, ist der Aufnahmebereich 46a in Umfangsrichtung 44a wellenförmig profiliert ausgebildet.

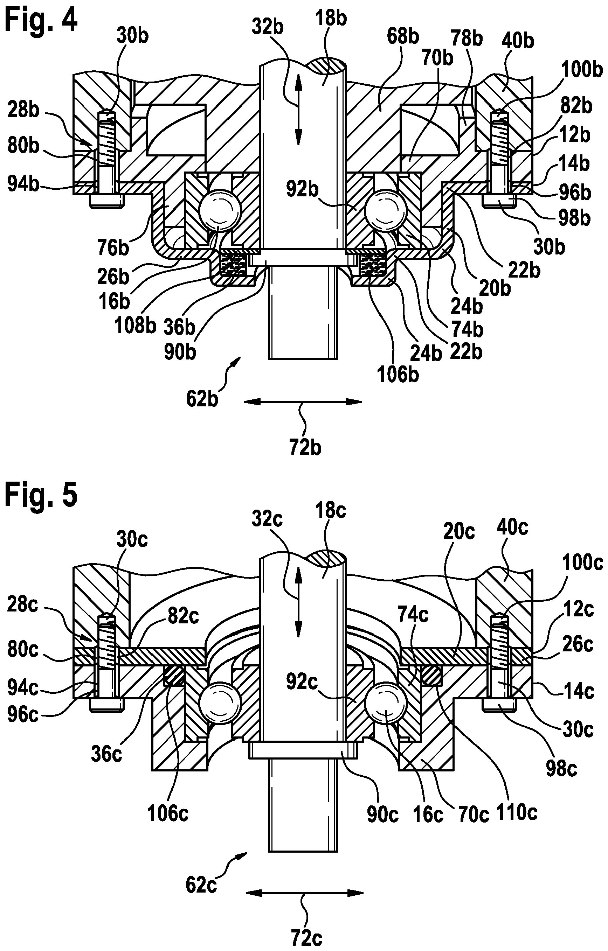

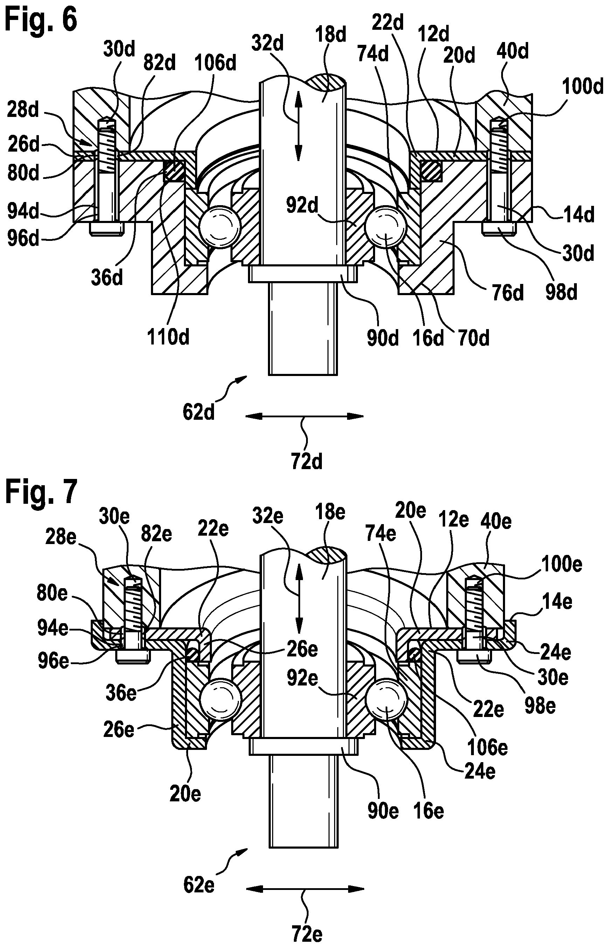

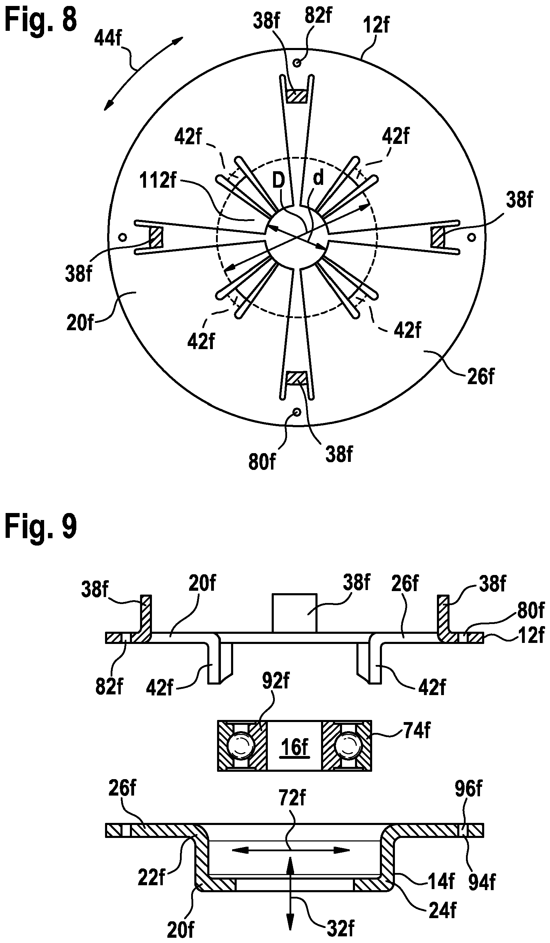

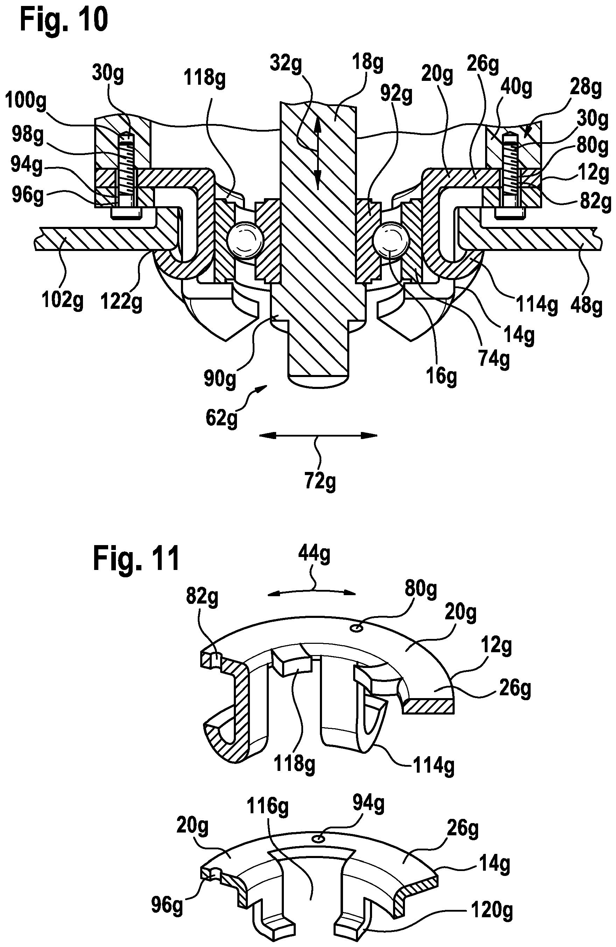

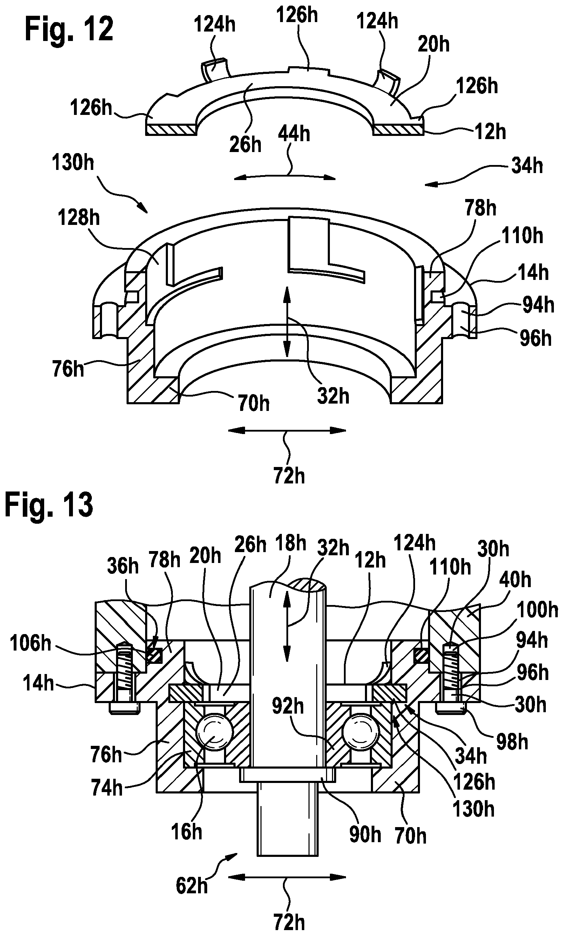

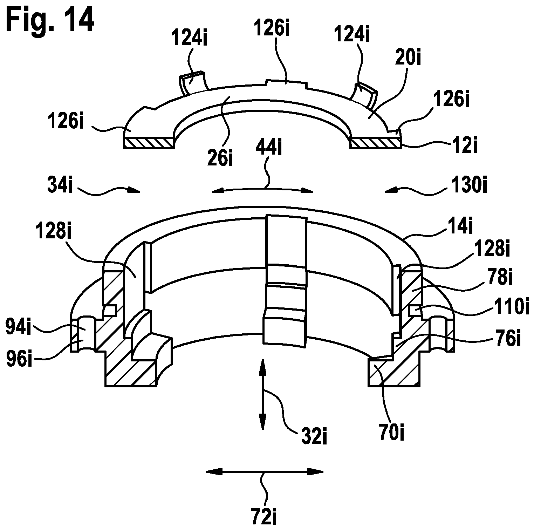

Die Figuren 4, 5, 6, 7, 8 und 9, 10 und 11, die Figuren 12 und 13, sowie die Figur 14 zeigen alternative Ausgestaltungen der Wellenlagervorrichtung für eine Handwerkzeugmaschine 10a-i, insbesondere für einen Winkelschleifer und/oder eine Kreissäge, mit einer ersten Stützeinheit 12a-i und einer zweiten Stützeinheit 14a-i. Sich im Wesentlichen entsprechende Bauteile und Merkmale sind grundsätzlich mit den gleichen Bezugszeichen beziffert, wobei zur Unterscheidung der Ausführungsbeispiele den Bezugszeichen die Buchstaben a (Figuren 1 bis 3b), b (Figur 4), c (Figur 5), d (Figur 6), e (Figur 7), f (Figuren 8 und 9), g (Figuren 10 und 11), h (Figuren 12 und 13) und i (Figur 14) hinzugefügt sind. Ferner kann bezüglich gleich bleibender Merkmale und Funktionen auf die Beschreibung zum Ausführungsbeispiel in den Figuren 1 bis 3b verwiesen werden. Die nachfolgende Beschreibung der Figuren 4 bis 14 beschränkt sich im Wesentlichen auf die jeweiligen Unterschiede zum Ausführungsbeispiel in den Figuren 1 bis 3b.

Figur 4 zeigt ein weiteres Ausführungsbeispiel einer Wellenlagervorrichtung. Die Wellenlagervorrichtung weist eine erste, einer Getriebeeinheit 60b zugewandte Stützeinheit 12b und eine zweite, einer Werkzeugaufnahme 62b zugewandte Stützeinheit 14b auf, wobei die zweite Stützeinheit 14b als aus einem Blechteil 26b gebildeten Plattenelement 20b mit zwei Axialabwinklungen 22b und mit zwei Radialabwinklungen 24b ausgestaltet ist.

In einem der Werkzeugaufnahme 62b zugewandten, radial innen liegenden Bereich der zweiten Stützeinheit 14b ist eine Dichtungseinheit 36b angeordnet, welche ein als Filzring ausgebildetes Dichtungselement 106b umfasst. Das Dichtungselement 106b liegt an der sich senkrecht zu einer Axialrichtung 32b erstreckenden, der Werkzeugaufnahme 62b zugewandten Radialabwinklung 24b und an einem sich parallel zur Axialrichtung 32b erstreckenden, der Werkzeugaufnahme 62b zugewandten Axialabwinklung 22b der zweiten Stützeinheit 14b an. Vor dem Dichtungselement 106b ist in Axialrichtung 32b von der Getriebeeinheit 60b zur Werkzeugaufnahme 62b betrachtet eine dünne Blechscheibe 108b angeordnet, über welche sich das Dichtungselement 106b an einem als Wälzlager ausgebildeten Lagerelement 16b einer Welle 18b abstützt. Das als Filzring ausgebildete Dichtungselement 106b ist radial außerhalb eines Stützflanschs 90b der Welle 18 angeordnet und ist zwischen diesen und der der Werkzeugaufnahme 62b zugewandten Axialabwinklung 22b der zweiten Stützeinheit 14b in einer Radialrichtung 72b gehalten.

Figur 5 zeigt eine weitere Ausgestaltung einer Wellenlagervorrichtung. Die Wellenlagervorrichtung weist eine erste, einer Getriebeeinheit 60c zugewandte Stützeinheit 12c auf, die als ebenes, scheibenförmiges Plattenelement 20c ausgebildet ist. Das Plattenelement 20c ist hierbei von einem Blechteil 26c gebildet. Zudem umfasst die Wellenlagervorrichtung eine zweite, aus Kunststoff gebildete Stützeinheit 14c auf, welche in einer Axialrichtung 32c von der Getriebeeinheit 60c aus zu einer Werkzeugaufnahme 62c betrachtet nach der ersten Stützeinheit 12c angeordnet ist. Die beiden Stützeinheiten 12c, 14c sind mittels einer Befestigungseinheit 28c, die Befestigungselemente 30c umfasst, aneinander gekoppelt und an dem Getriebegehäuse 40c der Handwerkzeugmaschine 10c befestigt. Die Befestigungselemente sind von Schrauben 98c und von mit den Schrauben 98c korrespondierenden Ausnehmungen 100c mit einem Innengewinde in einem Getriebegehäuse 40c gebildet. Die Schrauben 98c und die Ausnehmungen 100c mit Innengewinde sind gleichmäßig über einen Umfang der Stützeinheiten 12c, 14c verteilt.

Die zweite, aus Kunststoff gebildete Stützeinheit 14c weist einen Stützflansch 70c auf, der ein als Wälzlager ausgebildetes Lagerelement 16c, welches dazu vorgesehen ist, eine Welle 18c relativ zum Getriebegehäuse 40c drehbar zu lagern, in Axialrichtung 32c von der Getriebeeinheit 60c zur Werkzeugaufnahme 62c betrachtet an einem Außenring 74c des Lagerelements 16c abstützt. Das Lagerelement 16c wird in Axialrichtung 32c von der Getriebeeinheit 60c zur Werkzeugaufnahme 62c hin betrachtet zusätzlich an einem Innenring 92c des Lagerelements 16c von einem Stützflansch 90c, der an der Welle 18c angeordnet ist, abgestützt. Das Lagerelement 16c wird in Axialrichtung 32c von der Werkzeugaufnahme 62c zur Getriebeeinheit 60c betrachtet von der ersten Stützeinheit 12c an dem Außenring 74c des Lagerelements 16c abgestützt.

Die zweite Stützeinheit 14c weist zudem einen Anschlag 110c auf, der in Axialrichtung 32c von der Getriebeeinheit 60c zur Werkzeugaufnahme 62c betrachtet vor dem Stützflansch 70c der zweiten Stützeinheit, zur Abstützung des Lagerelements in Axialrichtung 32c angeordnet ist. Der Anschlag 110c der zweiten Stützeinheit 14c erstreckt sich in einer Umfangsrichtung 44c der zweiten Stützeinheit 14c und ist dazu vorgesehen, eine Dichtungseinheit 36c, die ein als O-Ring ausgebildetes Dichtungselement 106c umfasst, aufzunehmen.

Eine in Figur 6 dargestellte Wellenlagervorrichtung entspricht in Wesentlichen der Wellenlagervorrichtung aus Figur 5. Eine erste, einer Getriebeeinheit 60d zugewandete Stützeinheit 12d ist hierbei von einem als Blechteil 26d gebildeten Plattenelement 20d mit einer Axialabwinklung 22d gebildet. Eine zweite, einer Werkzeugaufnahme 62d zugewandte Stützeinheit 14d entspricht im Wesentlichen der in Figur 5 dargestellten, zweiten Stützeinheit 14c.

Figur 7 zeigt eine Wellenlagervorrichtung mit einer ersten, einer Getriebeeinheit 60e zugewandten und von einem als Blechteil 26e ausgebildeten Plattenelement 20e gebildeten Stützeinheit 12e mit einer Axialabwinklung 22e. Die erste Stützeinheit 12e entspricht zumindest im Wesentlichen der ersten Stützeinheit 12d der in Figur 6 dargestellten Wellenlagervorrichtung. Zudem ist eine zweite, einer Werkzeugaufnahme 62e zugewandte Stützeinheit 14e vorgesehen, die von einem als Blechteil 26e ausgebildeten Plattenelement 20e mit einer Axialabwinklung 22e und mit zwei Radialabwinklungen 24e gebildet ist. Ein Bereich der zweiten Stützeinheit 14e, welcher senkrecht zu einer Axialrichtung 32e verläuft und der Werkzeugaufnahme 62e zugewandt ist, sichert ein Lagerelement 16e einer Welle 18e in Axialrichtung 32e zur Werkzeugaufnahme 62e. In einem radial inneren Bereich der zweiten Stützeinheit 14e ist eine Dichtungseinheit 36e angeordnet. Die Dichtungseinheit 36e umfasst ein von einem O-Ring gebildetes Dichtungselement 106e. Das Dichtungselement 106e ist in Axialrichtung 32e von der Getriebeeinheit 60e zur Werkzeugaufnahme 62e betrachtet vor dem Lagerelement 16e angeordnet. Das als O-Ring ausgebildete Dichtungselement 106e erstreckt sich radial außerhalb eines Bereichs der ersten Stützeinheit 12e, welcher parallel zur Axialrichtung 32e verläuft und sich an die Axialabwinklung 22e der ersten Stützeinheit 12e anschließt.

Die Figuren 8 und 9 zeigen ein weiteres Ausbildungsbeispiel einer Wellenlagervorrichtung für eine Handwerkzeugmaschine 10f mit einer ersten, einer Getriebeeinheit 60f zugewandten Stützeinheit 12f und mit einer zweiten, einer Werkzeugaufnahme 62f zugewandten Stützeinheit 14f, die dazu vorgesehen sind, ein als Wälzlager ausgebildetes Lagerelement 16f einer Welle 18f abzustützen. Die erste und die zweite Stützeinheit 12f, 14f sind jeweils von einem als Blechteil 26f ausgebildeten Plattenelement 20f gebildet. Die erste, von einem Blechteil 26f gebildete Stützeinheit 12f weist vier, in einer Umfangsrichtung 44f gleichmäßig verteilte Zentrierelemente 38f auf, die zu einer Zentrierung der ersten Stützeinheit 12f in einem Getriebegehäuse 40f vorgesehen sind. Die Zentrierelemente 38f sind von Blechlaschen gebildet, die sich in einer Axialrichtung 32f von der ersten Stützeinheit 12f zur Getriebeeinheit 60f erstrecken. Zudem weist die erste Stützeinheit 12f vier weitere Zentrierelemente 42f auf, die in Umfangsrichtung 44f gleichmäßig verteilt und relativ zu den Zentrierelementen 38f zur Zentrierung der ersten Stützeinheit 12f im Getriebegehäuse 40f in einer Umfangsrichtung um 45° versetzt angeordnet sind. Die weiteren Zentrierelemente 42f sind ebenfalls als Blechlaschen ausgebildet, die sich in Axialrichtung 32f von der ersten Stützeinheit 12f zur Werkzeugaufnahme 62f erstrecken. Die vier weiteren Zentrierelemente 42f sind dazu vorgesehen, das Lagerelement 16f relativ zu der ersten Stützeinheit 12f zu zentrieren. In einer Radialrichtung 72f wirkende Kräfte werden über die weiteren Zentrierelemente 42f in einer Radialrichtung 72f an das Getriebegehäuse 40f der Handwerkzeugmaschine 10f geleitet und von diesem aufgenommen.

Zwischen den vier weiteren Zentrierelementen 42f zur Zentrierung des Lagerelements 16f der Welle 18f sind von Stegen gebildete Verbindungselemente 112f vorgesehen, die einen Durchmesser d bilden, welcher kleiner ist, als ein Durchmesser D, den die Zentrierelemente 42f zur Zentrierung des Lagerelements 16f bilden. Die Verbindungselemente 112f sind in Umfangsrichtung 44f um die Welle 18f in einer senkrecht zur Axialrichtung 32f verlaufenden Ebene angeordnet und sichern das Lagerelement 16f in Axialrichtung 32f zur Getriebeeinheit 60f.

Die zweite Stützeinheit 14f weist eine Axialabwinklung 22f und eine Radialabwinklung 24f auf. Ein in Axialrichtung 32f der Getriebeeinheit 60f zugewandter Bereich der zweiten Stützeinheit 14f, welcher sich senkrecht zur Axialrichtung 32f erstreckt, liegt in einem montierten Zustand an der ersten Stützeinheit 12f in Axialrichtung 32f an und ist mittels einer Befestigungseinheit 28f mit der ersten Stützeinheit 12f verbunden und an dem Getriebegehäuse 40f befestigt. Die Befestigungseinheit 28f umfasst Befestigungselemente 30f, welche von Schrauben 98f und von zu den Schrauben 98f korrespondierenden Ausnehmungen 100f mit jeweils einem Innengewinde in Getriebegehäuse 40f gebildet sind. Die Befestigungselemente 30f sind gleichmäßig über einen Umfang der Stützeinheiten 12f, 14f und des Getriebegehäuses 40f verteilt angeordnet.

Ein weiterer Bereich der zweiten Stützeinheit 14f erstreckt sich ebenfalls senkrecht zur Axialrichtung 32f und ist in Axialrichtung 32f der Werkzeugaufnahme 62f zugewandt angeordnet. Dieser weitere Bereich ist dazu vorgesehen, das Lagerelement 16f in Axialrichtung 32f zur Werkzeugaufnahme 62f hin über einen Außenring 74f des Lagerelements 16f zu sichern. Ein parallel zur Axialrichtung 32f verlaufender Bereich der zweiten Stützeinheit 14f, welcher eine Mantelfläche 88f bildet, verbindet die senkrecht zur Axialrichtung 32f verlaufenden Bereiche der zweiten Stützeinheit 14f und ist dazu vorgesehen, die zweite Stützeinheit 14 relativ zur ersten Stützeinheit 12 zu zentrieren. Hierzu liegt der parallel zur Axialrichtung 32f verlaufende Bereich der zweiten Stützeinheit 14f an einer radial äußeren Fläche der Zentrierelemente 42f zur Zentrierung des Lagerelements 16f der ersten Stützeinheit 12f an.

In den Figuren 10 und 11 ist ein weiteres Ausführungsbeispiel einer erfindungsgemäßen Wellenlagervorrichtung mit einer ersten, einer Getriebeeinheit 60g zugewandten Stützeinheit 12g und einer zweiten, einer Werkzeugaufnahme 62g zugewandten Stützeinheit 14g dargestellt. Beide Stützeinheiten 12g, 14g sind von einem Plattenelement 20g gebildet, welches jeweils als Blechteil 26g ausgestaltet ist. Die erste Stützeinheit 12g weist in einer Umfangsrichtung 44g verteilte Hakenelemente 114g auf, die ein Lagerelement 16g in einer Radialrichtung 72g nach außen gegen ein Getriebegehäuse 40g abstützen. Die Hakenelemente 114g weisen in Radialrichtung 72g nach außen. Die Hakenelemente 114g zur radialen Abstützung des Lagerelements 16g greifen mit hakenförmigen, der Werkzeugaufnahme 62g zugewandten Enden durch Aussparungen 116g, die über einen Umfang der zweiten Stützeinheit 14g gleichmäßig verteilt angeordnet sind. Die hakenförmigen Enden der Hakenelemente 114g ragen in Radialrichtung 72g durch die Aussparungen 116g der zweiten Stützeinheit 14g hindurch.

Die erste Stützeinheit 12g weist weitere, über den Umfang der ersten Stützeinheit 12g verteilte Hakenelemente 118g, die in Radialrichtung 72g nach innen weisen auf. Die Hakenelemente 118g sichern das Lagerelement 16g in Axialrichtung 32g zur Getriebeeinheit 60g hin.

Die zweite Stützeinheit 14g weist ebenfalls, über den Umfang der zweiten Stützeinheit 14g gleichmäßig verteilte Hakenelemente 120g, welche in Radialrichtung 72g nach innen weisen auf. Die Hakenelemente 120g mit hakenförmigen, der Werkzeugaufnahme zugewandten Enden der Hakenelemente 120g sichern das Lagerelement 16g in Axialrichtung 32g zur Werkzeugaufnahme 62g hin.

Bei einer Montage der Wellenlagervorrichtung wird zuerst das Lagerelement 16g in Axialrichtung 32g, von den in Radialrichtung 72g nach außen weisenden Hakenelementen 118g zu den in Radialrichtung 72g nach innen weisenden Hakenelementen 120g betrachtet, zwischen die Hakenelemente 114g der erste Stützeinheit 12g eingeschoben. Dann wird die zweite Stützeinheit 14g auf die erste Stützeinheit 12g aufgeschoben. Die Hakenelemente 114g der ersten Stützeinheit 12g werden dabei durch die Aussparungen 116g der zweiten Stützeinheit 14g geführt. Eine Welle 18g wird in das Lagerelement 16g, welches in Axialrichtung 32g zwischen der ersten und der zweiten Stützeinheit 12g, 14g gehalten ist, in Axialrichtung 32g, von in Radialrichtung 72g nach außen weisenden Hakenelementen 118g zu den in Radialrichtung 72g nach innen weisenden Hakenelementen 120g betrachtet, eingeschoben. Auf die Welle 18g wird dann ein von einem Tellerrad gebildetes Zahnrad 68g aufgepresst. Die erste und die zweite Stützeinheit 12g, 14g werden dann zusammen mit der darin gehaltenen Welle 18g mittels einer Befestigungseinheit 28g an dem Getriebegehäuse 40g befestigt. Die Befestigungseinheit 28g weist Befestigungselemente 30g auf. Die Befestigungselemente 30g sind von Schrauben 98g und von mit den Schrauben 98g korrespondierenden Ausnehmungen 100g mit jeweils einem Innengewinde gebildet. Die Schrauben 98g erstrecken sich in einem montierten Zustand in Axialrichtung 32g durch von Axialkanälen 80g, 94g gebildete Ausnehmungen 82g, 96g der ersten und der zweiten Stützeinheit 12g, 14g.

Zudem kann eine von einer Schutzhaube 102g gebildete Zubehöreinheit 48g an die Wellenlagervorrichtung gekoppelt werden. Die Schutzhaube 102g weist hierzu Ausnehmungen auf, die an einer der Werkzeugaufnahme 62g zugewandten Seite der Schutzhaube 102g angeordnet sind. Die Ausnehmungen weisen erste, sich parallel zur Axialrichtung 32g erstreckende Bereiche und zweite, als Nut ausgebildete Bereiche auf. Der zweite Bereich erstreckt sich in einer Umfangsrichtung 44g. Die hakenförmigen Enden der Hakenelemente 118g werden während eines Montagevorgangs der Schutzhaube 102g durch die ersten Bereiche der Ausnehmungen der Schutzhaube 102g in Axialrichtung 32g geführt. Durch eine Drehbewegung der Schutzhaube 102g relativ zu der ersten Stützeinheit 12g, werden die hakenförmigen Enden der Hakenelemente 118g in die senkrecht zu den ersten Bereichen der Ausnehmungen verlaufende Nuten geführt und in Axialrichtung 32g zur Getriebeeinheit 60g und zur Werkzeugaufnahme 62g gesichert. Die Ausnehmungen der Schutzhaube 102g und die hakenförmigen Enden der Hakenelemente 118g der ersten Stützeinheit bilden einen Bajonettverschluss 122g.

Figuren 12 und 13 zeigen ein weiteres Ausführungsbeispiel einer erfindungsgemäßen Wellenlagervorrichtung. Die Wellenlagervorrichtung weist eine erste, einer Getriebeeinheit 60h zugewandte Stützeinheit 12h und eine zweite, einer Werkzeugaufnahme 62h zugewandte Stützeinheit 14h auf. Die erste Stützeinheit 12h ist von einem aus einem Blechteil 26h gebildeten Plattenelement 20h gebildet. Das Blechteil 26h weist Zentrierelemente 124h auf, die von Blechlaschen gebildet sind. Die Zentrierelemente 124h sind dazu vorgesehen, die erste Stützeinheit 12h relativ zu der zweiten Stützeinheit 14h zu zentrieren. Die als Blechlaschen ausgebildeten Zentrierelemente 124h erstrecken sich parallel zu einer Axialrichtung 32h von der ersten Stützeinheit 12h zur Getriebeeinheit 60h hin. Die Zentrierelemente 124h sind über einen Umfang der ersten Stützeinheit 12h gleichmäßig verteilt angeordnet. Zudem weist die erste, von dem Blechteil 26h gebildete Stützeinheit 12h Halteelemente 126h auf. Die Halteelemente 126h sind von Blechlaschen gebildet. Die Halteelemente 126h sind in einer sich senkrecht zur Axialrichtung 32h erstreckenden Ebene angeordnet. Die Halteelemente 126h sind über den Umfang der ersten Stützeinheit 12h gleichmäßig verteilt angeordnet. Die erste Stützeinheit 12h sichert ein als Wälzlager ausgebildetes Lagerelement 16h einer Welle 18 in Axialrichtung 32h zur Getriebeeinheit 60h.

Die zweite Stützeinheit 14h ist aus Kunststoff gebildet und stützt sich in Axialrichtung 32h gegen ein Getriebegehäuse 40h, von der Werkzeugaufnahme 62h zur Getriebeeinheit 60h betrachtet, ab. Die zweite Stützeinheit 14h weist einen Stützflansch 70h auf, welcher das Lagerelement 16h in Axialrichtung 32h zur Werkzeugaufnahme 62h sichert. Die zweite Stützeinheit 14h weist einen Zentrierbund 78h auf. Der Zentrierbund 78h erstreckt sich von der zweiten Stützeinheit 14h zur Getriebeeinheit 60h hin parallel zur Axialrichtung 32h. Die zweite Stützeinheit 14h weist einen nutförmigen Anschlag 110h auf, der in einem radial äußeren Bereich des Zentrierbunds 78h angeordnet ist. In einem montierten Zustand der Wellenlagervorrichtung nimmt der Anschlag 110h eine Dichtungseinheit 36h auf. Die Dichtungseinheit 36h umfasst ein Dichtungselement 106h, welches von einem aus einem Elastomer gebildeten O-Ring gebildet ist.

Des Weiteren weist die zweite Stützeinheit 14h Ausnehmungen 128h auf, die erste, sich parallel zur Axialrichtung 32h erstreckende Bereiche und zweite, als Nut ausgebildete Bereiche aufweisen. Der zweite Bereich erstreckt sich in einer Umfangsrichtung 44h. Die Halteelemente 126h der ersten Stützeinheit 12h werden während eines Montagevorgangs durch die ersten Bereiche der Ausnehmungen 128h der zweiten Stützeinheit 14h in Axialrichtung 32h geführt. Durch eine Drehbewegung der Stützeinheiten 12h, 14h relativ zueinander werden die Halteelemente 126h in die senkrecht zu den ersten Bereichen der Ausnehmungen 128h verlaufende Nuten geführt und in Axialrichtung 32h zur Getriebeeinheit 60h und zur Werkzeugaufnahme 62h gesichert.

Die zweite Stützeinheit 14h wird mittels einer Befestigungseinheit 28h an einem Getriebegehäuse 40h befestigt. Die Befestigungseinheit 28h weist Befestigungselemente 30h auf. Die Befestigungselemente 30h sind von Schrauben 98h und von mit den Schrauben 98h korrespondierenden Ausnehmungen 100h mit jeweils einem Innengewinde gebildet. Die Schrauben 98h erstrecken sich in einem montierten Zustand in Axialrichtung 32h durch von Axialkanälen 94h gebildete Ausnehmungen 96h der zweiten Stützeinheit 14h.

Die Halteelemente 126h der ersten Stützeinheit 12h und die Ausnehmungen 128h der zweiten Stützeinheit 14h bilden Befestigungselemente einer weiteren Befestigungseinheit 130h. Die weitere Befestigungseinheit 130h ist als Bajonettverschluss 34h ausgebildet.

Figur 14 zeigt ein weiteres Ausführungsbeispiel einer Wellenlagervorrichtung mit einer ersten, einer Getriebeeinheit 60i zugewandten Stützeinheit 12i und einer zweiten, einer Werkzeugaufnahme 62i zugewandten Stützeinheit 14i. Die erste Stützeinheit 12i entspricht im Wesentlichen der ersten Stützeinheit 12h aus Figur 12 und aus Figur 13. Die zweite, aus Kunststoff gebildete Stützeinheit 14i weist Ausnehmungen 128i mit einem ersten Bereich, der sich parallel zu einer Axialrichtung 32i erstreckt, und mit einem zweiten Bereich, der als Nut ausgebildet ist. Durch den ersten Bereich der Ausnehmungen 128i wird ein Halteelement 126i der ersten Stützeinheit 12i während eines Montagevorgangs in Axialrichtung 32i von der Getriebeeinheit 60i zur Werkzeugaufnahme 62i geführt. Anschließend werden die erste und die zweite Stützeinheit 12i, 14i relativ zueinander in einer Umfangsrichtung 44i gedreht. Dabei werden die Halteelemente 126i der ersten Stützeinheit 12i in den Nuten, welche sich senkrecht zum ersten Bereich der Ausnehmungen 128i erstrecken, geführt und hintergreifen die Nuten. Dadurch werden die erste und die zweite Stützeinheit 12i, 14i in Axialrichtung aneinander gekoppelt.

Die Nuten der Ausnehmungen 128i der zweiten Stützeinheit 14i sind in Axialrichtung 32i zur Werkzeugaufnahme 62i hin offen ausgebildet, sodass die zweite Stützeinheit 14i mittels eines Spritzgussverfahrens hergestellt werden kann. Die ersten Bereiche der Ausnehmungen 128i der zweiten Stützeinheit werden dabei in Axialrichtung 32i von der Getriebeeinheit 60i zur Werkzeugaufnahme 62i von einem Spritzgusswerkzeug abgebildet. Die Nuten der Ausnehmungen 128i der zweiten Stützeinheit 14i werden in Axialrichtung 32i von der Werkzeugaufnahme 62i zur Getriebeeinheit 60i von einem Spritzgusswerkzeug abgebildet.

## Patentansprüche

1. Wellenlagervorrichtung für eine Handwerkzeugmaschine (10a; 10b; 10d; 10e; 10f), insbesondere für einen Winkelschleifer und/oder eine Kreissäge, mit zumindest einer ersten Stützeinheit (12) und mit zumindest einer zweiten Stützeinheit (14a; 14b; 14d; 14e; 14f), die dazu vorgesehen sind, ein Lagerelement (16a; 16b; 16d; 16e; 16f) einer Welle (18a; 18b; 18d; 18e; 18f) axial und/oder radial abzustützen, wobei wenigstens eine der zumindest zwei Stützeinheiten (14a; 14b; 12d; 12e; 14e; 14f) zumindest teilweise von einem Plattenelement (20a; 20b; 20d; 20e; 20f) mit wenigstens einer Axial- und/oder Radialabwinklung (22a; 24a; 22b; 24b; 22d; 22e; 24e; 22f; 24f) gebildet ist
**dadurch gekennzeichnet,**
**dass** wenigstens eine Befestigungseinheit (130h; 130i) zum lösbaren Verbinden der zumindest zwei Stützeinheiten (12h; 14h; 12i; 14i) vorgesehen ist, die als Bajonettverschluss (34h; 34i) ausgebildet ist.

2. Wellenlagervorrichtung nach Anspruch 1,
**dadurch gekennzeichnet,**
**dass** das Plattenelement zumindest zwei Axial- und/oder Radialabwinklungen (22a; 24a; 22b; 24b; 22e; 24e; 22f; 24f) aufweist.

3. Wellenlagervorrichtung nach nach einem der vorhergehenden Ansprüche,
**dadurch gekennzeichnet,**
**dass** wenigstens eine der zumindest zwei Stützeinheiten (12a; 12b; 14c; 14d; 14h) zumindest teilweise aus Kunststoff gebildet ist.

4. Wellenlagervorrichtung nach Anspruch 3,
**gekennzeichnet durch**
das Lagerelement (16a; 16b; 6c; 16d; 16h), das getrennt von der aus Kunststoff gebildeten Stützeinheit (12a; 12b; 14c; 14d; 14h) ausgebildet ist.

5. Wellenlagervorrichtung nach einem der vorhergehenden Ansprüche,
**dadurch gekennzeichnet,**
**dass** wenigstens eine der zumindest zwei Stützeinheiten (14a; 14b; 12c; 12d; 12e; 14e; 12f; 14f; 12g; 14g; 12h) von einem Blechteil (26) gebildet ist.

6. Wellenlagervorrichtung nach einem der vorhergehenden Ansprüche,
**gekennzeichnet durch**
wenigstens eine getrennt von den zumindest zwei Stützeinheiten (12a; 14a; 12b; 14b; 12c; 14c; 12d; 14d; 12e; 14e; 12f; 14f; 12g; 14g) ausgebildete Befestigungseinheit (28a; 28b; 28c; 28d; 28e; 28f; 28g), welche dazu vorgesehen ist, die zumindest zwei Stützeinheiten (12a; 14a; 12b; 14b; 12c; 14c; 12d; 14d; 12e; 14e; 12f; 14f; 12g; 14g) miteinander zu koppeln.

7. Wellenlagervorrichtung nach Anspruch 6,
**dadurch gekennzeichnet**
**dass** die Befestigungseinheit (28a; 28b; 28c; 28d; 28e; 28f; 28g) wenigstens ein Befestigungselement (30a; 30b; 30c; 30d; 30e; 30f; 30g) aufweist, das sich in einem montierten Zustand durch die zumindest zwei Stützeinheiten (12a; 14a; 12b; 14b; 12c; 14c; 12d; 14d; 12e; 14e; 12f; 14f; 12g; 14g) zumindest in einer Axialrichtung (32a; 32b; 32c; 32d; 32e; 32f; 32g) erstreckt.

8. Wellenlagervorrichtung nach einem der vorhergehenden Ansprüche,
**gekennzeichnet durch**
wenigstens eine Dichtungseinheit (36b; 36c; 36d; 36e; 36h), die in einem radial inneren Bereich wenigstens einer der zumindest zwei Stützeinheiten (12b; 14b; 12c; 14c; 12d; 14d; 12e; 14e; 12h; 14h) angeordnet ist.

9. Wellenlagervorrichtung nach einem der vorhergehenden Ansprüche,
**dadurch gekennzeichnet,**
**dass** wenigstens eine der zumindest zwei Stützeinheiten (12f; 14f) zumindest ein erstes Zentrierelement (38f) zur Zentrierung zumindest einer der zumindest zwei Stützeinheiten (12f; 14f) an einem Getriebegehäuse (40f) der Handwerkzeugmaschine (10f) und zumindest ein zweites Zentrierelement (42f) zur Zentrierung des Lagerelements (16f) der Welle (18f) an zumindest einer weiteren Stützeinheit (12f, 14f) aufweist.

10. Wellenlagervorrichtung nach einem der vorhergehenden Ansprüche,
**dadurch gekennzeichnet,**
**dass** zumindest eine der zumindest zwei Stützeinheiten (12a, 14a) einen in einer Umfangsrichtung (44a) profilierten Aufnahmebereich (46a) aufweist, der sich in Umfangsrichtung (44a) der zumindest einen Stützeinheit (14a) erstreckt und der dazu vorgesehen ist, zumindest im Wesentlichen eine Zubehöreinheit (48a) formschlüssig aufzunehmen.

11. Handwerkzeugmaschine (10a-h), insbesondere Winkelschleifer oder Kreissäge, mit zumindest einer Wellenlagervorrichtung nach einem der vorhergehenden Ansprüche.

12. System mit einer Wellenlagervorrichtung nach einem der Ansprüche 1 bis 11 und wenigstens einer zu den zumindest zwei Stützeinheiten (12a, 14a) differierenden weiteren Stützeinheit (50a), die alternativ zu zumindest einer der zumindest zwei Stützeinheiten (12a, 14a) mit der anderen der zumindest zwei Stützeinheiten (12a, 14a) koppelbar ist.

## Claims

1. Shaft bearing device for a hand-held power tool (10a; 10b; 10d; 10e; 10f), in particular for an angle grinder and/or a circular saw, having at least one first support unit (12) and having at least one second support unit (14a; 14b; 14d; 14e; 14f) which are intended axially and/or radially to support a bearing element (16a; 16b; 16d; 16e; 16f) of a shaft (18a; 18b; 18d; 18e; 18f), wherein at least one of the at least two support units (14a; 14b; 12d; 12e; 14e; 14f) is formed at least partially by a plate element (20a; 20b; 20d; 20e; 20f) having at least one axial and/or radial bend (22a; 24a; 22b; 24b; 22d; 22e; 24e; 22f; 24f),
**characterized in that**
at least one attachment unit (130h; 130i) for the releasable connection of the at least two support units (12h; 14h; 12i; 14i) is provided which is configured as a bayonet fixing (34h; 34i).

2. Shaft bearing device according to Claim 1,
**characterized in that**
the plate element exhibits at least two axial and/or radial bends (22a; 24a; 22b; 24b; 22e; 24e; 22f; 24f).

3. Shaft bearing device according to one of the preceding claims,
**characterized in that**
at least one of the at least two support units (12a; 12b; 14c; 14d; 14h) is formed at least partially from plastic.

4. Shaft bearing device according to Claim 3,
**characterized by**
the bearing element (16a; 16b; 16c; 16d; 16h), which is executed separately from the support unit (12a; 12b; 14c; 14d; 14h) which is formed from plastic.

5. Shaft bearing device according to one of the preceding claims,
**characterized in that**
at least one of the at least two support units (14a; 14b; 12c; 12d; 12e; 14e; 12f; 14f; 12g; 14g; 12h) is formed from a sheet metal part (26).

6. Shaft bearing device according to one of the preceding claims,
**characterized by**
at least one attachment unit (28a; 28b; 28c; 28d; 28e; 28f; 28g) executed separately from the at least two support units (12a; 14a; 12b; 14b; 12c; 14c; 12d; 14d; 12e; 14e; 12f; 14f; 12g; 14g), which is intended to connect the at least two support units (12a; 14a; 12b; 14b; 12c; 14c; 12d; 14d; 12e; 14e; 12f; 14f; 12g; 14g) together.

7. Shaft bearing device according to Claim 6,
**characterized in that**
the attachment unit (28a; 28b; 28c; 28d; 28e; 28f; 28g) exhibits at least one attachment element (30a; 30b; 30c; 30d; 30e; 30f; 30g), which, in its assembled state, extends through the at least two support units (12a; 14a; 12b; 14b; 12c; 14c; 12d; 14d; 12e; 14e; 12f; 14f; 12g; 14g) at least in an axial direction (32a; 32b; 32c; 32d; 32e; 32f; 32g) .

8. Shaft bearing device according to one of the preceding claims,
**characterized by**
at least one sealing unit (36b; 36c; 36d; 36e; 36h), which is arranged in a radially inner region of at least one of the at least two support units (12b; 14b; 12c; 14c; 12d; 14d; 12e; 14e; 12h; 14h).

9. Shaft bearing device according to one of the preceding claims,
**characterized in that**
at least one of the at least two support units (12f; 14f) exhibits at least one first centering element (38f) for the centering of at least one of the at least two support units (12f; 14f) on a gearbox housing (40f) of the hand-held power tool (10f) and at least one second centering element (42f) for centering the bearing element (16f) of the shaft (18f) on at least one further support unit (12f; 14f).

10. Shaft bearing device according to one of the preceding claims,
**characterized in that**
at least one of the at least two support units (12a; 14a) exhibits a receiving region (46a) that is profiled in a circumferential direction (44a), which extends in the circumferential direction (44a) of the at least one support unit (14a) and is intended to receive at least essentially one accessory unit (48a) in a form-locking manner.

11. Hand-held power tool (10a-h), in particular an angle grinder or a circular saw, having at least one shaft bearing device according to one of the preceding claims.

12. System having a shaft bearing device according to one of Claims 1 to 11 and at least one further support unit (50a) differing from the at least two support units (12a; 14a), which, alternatively to at least one of the at least two support units (12a; 14a), is adapted to be connected to the other of the at least two support units (12a; 14a).

## Revendications

1. Dispositif palier d'arbre pour une machine-outil portative (10a ; 10b ; 10d ; 10e ; 10f), en particulier pour une meuleuse d'angle et/ou une scie circulaire, comprenant au moins une première unité de support (12) et comprenant au moins une deuxième unité de support (14a ; 14b ; 14d ; 14e ; 14f), lesquelles sont destinées à supporter axialement et/ou radialement un élément palier (16a ; 16b ; 16d ; 16e ; 16f) d'un arbre (18a ; 18b ; 18d ; 18e ; 18f), au moins l'une desdites au moins deux unités de support (14a ; 14b ; 12d ; 12e ; 14e ; 14f) étant formée au moins partiellement par un élément plaque (20a ; 20b ; 20d ; 20e ; 20f) comprenant au moins un coude axial et/ou radial (22a ; 24a ; 22b ; 24b ; 22d ; 22e ; 24e ; 22f ; 24f),
**caractérisé en ce**
**qu'**au moins une unité de fixation (130h ; 130i) est destinée à relier de manière libérable lesdites au moins deux unités de support (12h ; 14h ; 12i ; 14i), laquelle unité de fixation est réalisée sous forme de liaison à baïonnette (34h ; 34i).

2. Dispositif palier d'arbre selon la revendication 1,
**caractérisé en ce que**
l'élément plaque comprend au moins deux coudes axiaux et/ou radiaux (22a ; 24a ; 22b ; 24b ; 22e ; 24e ; 22f ; 24f).

3. Dispositif palier d'arbre selon l'une des revendications précédentes,
**caractérisé en ce**
**qu'**au moins l'une desdites au moins deux unités de support (12a ; 12b ; 14c ; 14d ; 14h) est formée au moins partiellement à partir de matière synthétique.

4. Dispositif palier d'arbre selon la revendication 3,
**caractérisé par**
l'élément palier (16a ; 16b ; 16c ; 16d ; 16h), qui est réalisé de manière séparée de l'unité de support (12a ; 12b ; 14c ; 14d ; 14h) formée à partir de matière synthétique.

5. Dispositif palier d'arbre selon l'une des revendications précédentes,
**caractérisé en ce**
**qu'**au moins l'une desdites au moins deux unités de support (14a ; 14b ; 12c ; 12d ; 12e ; 14e ; 12f ; 14f ; 12g ; 14g ; 12h) est formée par une pièce en tôle (26).

6. Dispositif palier d'arbre selon l'une des revendications précédentes,
**caractérisé par**
au moins une unité de fixation (28a ; 28b ; 28c ; 28d ; 28e ; 28f ; 28g) réalisée de manière séparée desdites au moins deux unités de support (12a ; 14a ; 12b ; 14b ; 12c ; 14c ; 12d ; 14d ; 12e ; 14e ; 12f ; 14f ; 12g ; 14g), laquelle unité de fixation est destinée à accoupler l'une à l'autre lesdites au moins deux unités de support (12a ; 14a ; 12b ; 14b ; 12c ; 14c ; 12d ; 14d ; 12e ; 14e ; 12f ; 14f ; 12g ; 14g).

7. Dispositif palier d'arbre selon la revendication 6,
**caractérisé en ce que**
l'unité de fixation (28a ; 28b ; 28c ; 28d ; 28e ; 28f ; 28g) comprend au moins un élément de fixation (30a ; 30b ; 30c ; 30d ; 30e ; 30f ; 30g) qui, dans un état monté, s'étend à travers lesdites au moins deux unités de support (12a ; 14a ; 12b ; 14b ; 12c ; 14c ; 12d ; 14d ; 12e ; 14e ; 12f ; 14f ; 12g ; 14g) au moins dans une direction axiale (32a ; 32b ; 32c ; 32d ; 32e ; 32f ; 32g).

8. Dispositif palier d'arbre selon l'une des revendications précédentes,
**caractérisé par**
au moins une unité d'étanchéité (36b ; 36c ; 36d ; 36e ; 36h) qui est disposée dans une zone radialement intérieure d'au moins l'une desdites au moins deux unités de support (12b ; 14b ; 12c ; 14c ; 12d ; 14d ; 12e ; 14e ; 12h ; 14h).

9. Dispositif palier d'arbre selon l'une des revendications précédentes,
**caractérisé en ce**
**qu'**au moins l'une desdites au moins deux unités de support (12f ; 14f) comprend au moins un premier élément de centrage (38f) pour le centrage d'au moins l'une desdites au moins deux unités de support (12f ; 14f) sur un carter de transmission (40f) de la machine-outil portative (10f) et au moins un deuxième élément de centrage (42f) pour le centrage de l'élément palier (16f) de l'arbre (18f) sur au moins une autre unité de support (12f, 14f).

10. Dispositif palier d'arbre selon l'une des revendications précédentes,
**caractérisé en ce**
**qu'**au moins l'une desdites au moins deux unités de support (12a, 14a) comprend une zone de réception (46a) profilée dans une direction périphérique (44a), laquelle zone de réception s'étend dans la direction périphérique (44a) de ladite au moins une unité de support (14a) et est destinée à recevoir par complémentarité de forme au moins sensiblement une unité accessoire (48a).

11. Machine-outil portative (10a-h), en particulier meuleuse d'angle ou scie circulaire, comprenant au moins un dispositif palier d'arbre selon l'une des revendications précédentes.

12. Système comprenant un dispositif palier d'arbre selon l'une quelconque des revendications 1 à 11 et au moins une autre unité de support (50a) différente desdites au moins deux unités de support (12a, 14a), laquelle peut, en variante à au moins l'une desdites au moins deux unités de support (12a, 14a), être accouplée à l'autres desdites au moins deux unités de support (12a, 14a).
